Europäisches Patentamt

**European Patent Office**

**Office européen des brevets**

(19)

(11) Veröffentlichungsnummer: **0 184 984**
**A1**

(12) # EUROPÄISCHE PATENTANMELDUNG

(21) Anmeldenummer: 85810517.4

(51) Int. Cl.⁴: **H 04 Q 1/46**

(22) Anmeldetag: 06.11.85

(30) Priorität: 30.11.84 CH 5725/84

(43) Veröffentlichungstag der Anmeldung: 18.06.86
Patentblatt 86/25

(84) Benannte Vertragsstaaten: CH FR GB IT LI SE

(71) Anmelder: Autophon A.G., Ziegelmattstrasse 1-15,
CH-4500 Solothurn 3 (CH)

(72) Erfinder: Aeberhard, Martin, Tannenweg 27,
CH-4500 Solothurn (CH)
Erfinder: Gisiger, Dieter, Bellacherstrasse 7,
CH-4513 Langendorf (CH)
Erfinder: Jacot, Jean-Pierre,
Schachenmühlestrasse 180, CH-4511 Hubersdorf (CH)

(74) Vertreter: Schweizer, Hans et al, Bovard AG
Patentanwälte VSP Optingenstrasse 16,
CH-3000 Bern 25 (CH)

(54) **Auswerteeinrichtung für ein impulsweise auftretendes Tonsignal.**

(57) Die Einrichtung dient insbesondere zur Auswertung der Tonsignal-Kombinationen (2), die bei der Telefon-Tastenwahl erzeugt werden. Dabei werden aus den Summen von Signal- und Zwischenraum-Zeiten Quotienten gebildet und neben Maximal- und Minimal-Zeiten zur Prüfung der Signale herangezogen. Auf diese Weise können gegenüber Einrichtungen nach dem Stand der Technik einerseits durch kurze Unterbrüche verstümmelte Signale besser ausgewertet werden, und anderseits wird das fälschliche Ansprechen auf Sprachsignale besser verhindert.

EP 0 184 984 A1

0184984

— 1 —

<u>Auswerteeinrichtung für ein impulsweise auftretendes Tonsignal</u>

Insbesondere bei der Auswertung von durch eine Tastatur erzeugten Ton-Wahlsignalen stellt sich die Aufgabe, die bestimmte Frequenzen aufweisenden Tonsignal-Kombinationen auch dann richtig zu erkennen und ein diesbezügliches Ausgangssignal zu erzeugen, wenn sie durch meist von Schaltknacken herrührende Unterbrüche verstümmelt sind. Daneben ist beim Auftreten von Sprachsignalen in der Zeit zwischen den Tonsignalen zu verhindern, dass durch in diesen Sprachsignalen enthaltene, eine auszuwertende Frequenzkombination aufweisende Signale ein Ausgangssignal erzeugt wird. Das Vorliegen einer auszuwertenden Kombination aus zwei Tonfrequenzen wird dabei vorzugsweise in einer ersten Stufe mit einer Kombination von analoger SC-Technik und Digitaltechnik, beispielsweise mit der im Handel erhältlichen integrierten Schaltung MT 8870 von Mitel festgestellt. Diese Schaltung liefert, solange ein Signal mit einer richtigen Frequenzkombination an ihren Eingang angelegt wird, an einem ihrer Ausgänge mit sehr kleiner Verzögerung ein Gleichspannungssignal, dessen Amplitude von der Amplitude der Tonsignale am Eingang unabhängig ist. Dieses Gleichspannungssignal folgt somit allen Unterbrüchen des Tonsignals und tritt jeweils in unregelmässigen Abständen kurzzeitig auf, wenn Sprache an den genannten Eingang angelegt wird.

In einer zweiten Stufe wird der zeitliche Verlauf dieses Gleichspannungssignals überprüft und dabei entschieden, ob das Signal als gültiges Signal anzuerkennen sei und damit die Erzeugung eines Ausgangssignals bewirken soll.

- 2 -

Nach dem Stand der Technik wird diese Ueberprüfung durch zwei RC-Glieder vorgenommen, von denen das erste das Ansprechen auf Sprache und das zweite kurze Unterbrüche im Ausgangssignal verhindern soll. Die erste RC-Schaltung bewirkt eine Ansprechverzögerung, welche nach jedem Aussetzen des Tonsignals wieder neu zu laufen beginnt. Unter diesen Voraussetzungen kann aufgrund eines durch Unterbrüche zerhackten Tonsignals mit unterhalb der Ansprechverzögerung liegenden Teilsignalen auch dann kein Ausgangssignal gebildet werden, wenn die Gesamtheit der Teilsignale lang ist und die Unterbrüche nur kurz sind. Die zweite RC-Schaltung überbrückt, nachdem ein Ausgangssignal erzeugt worden ist, unter einer bestimmten Höchstdauer liegende Unterbrüche im Gleichspannungssignal und bewirkt dadurch die Erzeugung eines unzerhackten Ausgangssignals. Als Nachteil einer solchen Verzögerungseinrichtung hat sich jedoch gezeigt, dass ein an ein richtiges Tonsignal anschliessendes Sprachsignal, in welchem kurzzeitig aufeinanderfolgende kurze Impulse einer gültigen Frequenzkombination enthalten sind, das Ausgangssignal gegenüber dem Tonsignal verlängert.

Durch geschickte Wahl der Zeitkonstanten ist zwar eine annehmbare Funktionssicherheit zu erreichen, aber das ganze muss immer ein unbefriedigender Kompromiss zwischen Sicherheit auf Ansprechen bei Sprache und Verlust von gültigen Signalen bleiben.

Die vorliegende Erfindung löst nun die eingangs beschriebene Aufgabe auf eine Weise, bei welcher neben bekannten Zeitmessungen neue Kriterien herangezogen werden. Die Erfindung betrifft eine Auswerteeinrichtung nach dem Oberbegriff des Patentanspruchs 1, deren Kennzeichen im kennzeichnenden Teil des Patentanspruchs 1 festgehalten sind. In einer besonders

- 3 -

vorteilhaften Ausführungsform wird das Ausgangssignal nicht während des Tonsignals, sondern erst nach dessen Abschluss als Signal gleichbleibender Dauer gebildet.

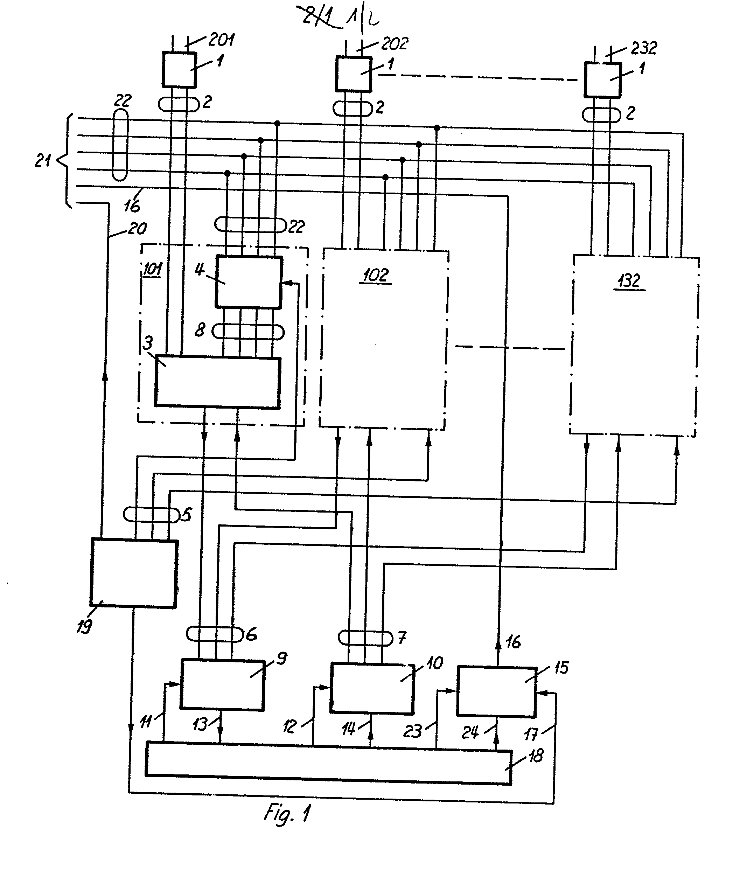

Die Erfindung wird anhand eines Ausführungsbeispiels erklärt. Die Figur 1 zeigt anhand eines grundsätzlichen Schaltbildes Auswerteeinrichtungen für die auf 32 Leitungen eintreffenden Signale, wobei alle Einrichtungen mit einem einzigen Mikrocomputer zusammenarbeiten, so dass je ein Teil des Mikrocomputers Bestandteil jeder Auswerteeinrichtung bildet.

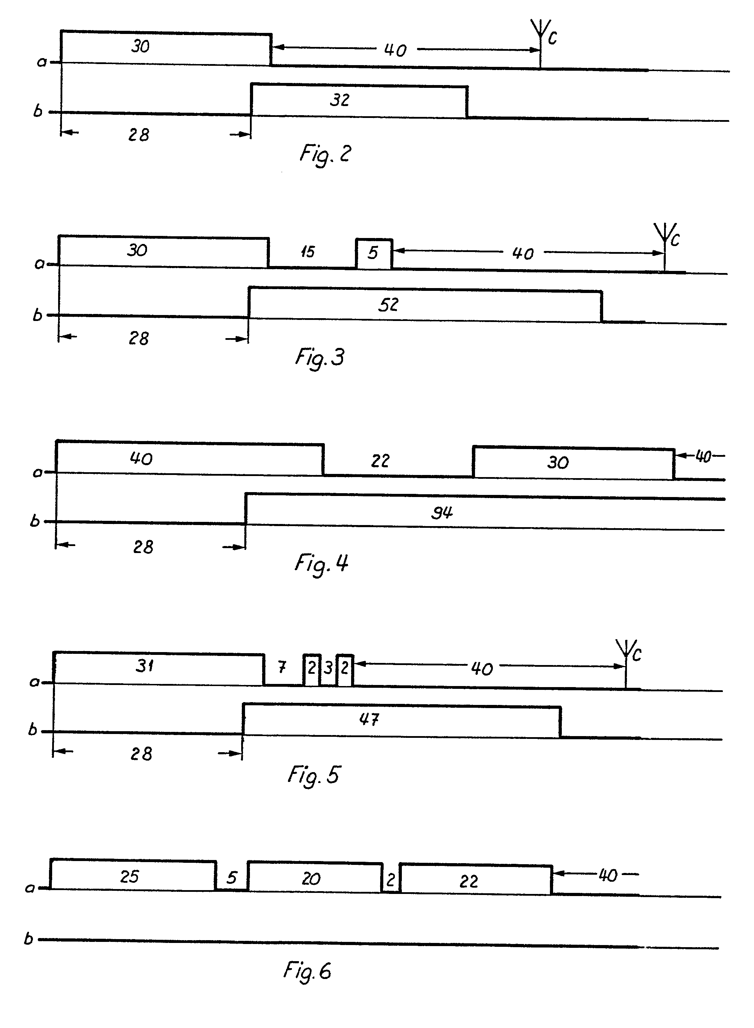

Die Figuren 2...6 zeigen je den zeitlichen Verlauf von aus verstümmelten Tonfrequenzenkombinationen erzeugten Gleichstromsignalen und die aufgrund der Auswertung dieser Signale am Ausgang einer Auswerteeinrichtung nach dem Stand der Technik auftretenden Signale.

Die Figur 1 zeigt 32 Umsetzer 101...132, beispielsweise des Typs MT 8870, denen je über die Leitungen 201...232 Tonsignale zugeführt werden, wobei diese Tonsignale je über einen Anschlusskreis 1 auf den Eingang 2 der Umsetzer gelangen. Jeder Umsetzer besteht aus Tonauswerte-Stromkreisen mit Speicherung des Ergebnisses 3 und einem elektronischen Schalter 4 (tristate buffer) für vier Ausgänge 8 (Q) der Tonauswerte-Stromkreise 3. Diese vier Ausgänge geben in digitaler Weise eine von 16 möglichen Tonfrequenzkombinationen an, welche über den Eingang 2 zugeführt werden. Die Schalter 4 sind je über eine zugehörige Steuerleitung 5 (TOE) steuerbar. Bei leitendem Schalter 4 sind die vier Ausgänge 8 an die Sammelleitungen 22 geschaltet.

Ein weiterer Ausgang 6 (ESt) gibt mit kleiner Ansprech- und Abfallverzögerung ein Gleichspannungssignal ab, solange irgend

- 4 -

eine gültige Tonfrequenzkombination empfangen wird. Ueber einen Eingang 7 (St/GT) werden die vier Ausgänge 8 gesteuert. Diese Ausgänge verbleiben jeweils, unabhängig vom Potential auf der zugehörigen Verbindung 7, im Zustand, der einer früher ausgewerteten Tonkombination entspricht und ändern ihren Zustand auf den der momentan empfangenen Tonkombination entsprechenden Zustand, wenn am Eingang 7 das Potential vom Ruhezustand in den aktiven Zustand übergeht.

Mit 9 ist ein Multiplexer bezeichnet, welcher, gesteuert über die Leitung 11, eine der Verbindungen 6 mit der Leitung 13 verbindet.

Mit 10 ist ein Speicher bezeichnet, welcher an 32 Speicherplätzen je einen Ruhe- und einen Arbeitszustand speichern kann, wobei jedem dieser Speicherplätze eine Ausgangsleitung 7 zugeordnet ist, deren Potential jeweils dem momentanen Zustand des entsprechenden Speicherplatzes entspricht.

Ein Speicher 15 mit 32 Speicherplätzen erhält über eine Verbindung 24 Informationen, welche je an den über die Leitungen 23 zugeführten Adressen gespeichert werden. Diese Informationen werden aus dem Speicher 15 über die Verbindung 16 ausgespeichert, wobei die Adresse, an welcher ausgespeichert werden soll, über die Leitungen 17 zugeführt wird.

Ein Ein-Chip-Mikrocomputer 18 empfängt alle Signale von den Umsetzern 101...132, wertet diese Signale aus, sendet Steuersignale nach diesen Umsetzern und gibt Signale ab, aus denen hervorgeht, welche der den Umsetzern zugeführten Tonsignale als gültig anerkannt werden. Eine Steuereinrichtung 19, die in nicht dargestellter Weise auch noch andere, je 32 Leitungen überwachende Auswerteeinrichtungen abwechslungsweise steuert, gibt ausser über die beschriebenen Steuerverbindungen 5 und 17 auch über die Leitung 20 Signale ab, die bei 21 zusammen mit den Verbindungen 16 und 22 einer nicht dargestellten Speicher- und Verarbeitungs-Einrichtung zugeführt werden.

An den Verbindungen 6 treten nun unabhängig voneinander Gleichspannungssignale auf, die dem zeitlichen Verlauf der empfangenen Tonkombinationen auf den Leitungen 201...232 entsprechen. Der Computer 18 steuert nun den Multiplexer 9 über die Leitungen 11 derart, dass jede ms die Verbindungen 6 der Reihe nach über die Verbindung 13 an den Computer 18 angeschlossen werden. Jedem Umsetzer sind im Computer vier Speicherplätze zugeordnet, wobei

- an einem ersten Speicherplatz eine erste Summe der Zeiten der seit der letzten Rückstellung (Löschung) eingetroffenen Signale und der dazwischen liegenden Zwischenräume
- an einem zweiten Speicherplatz eine zweite Summe der Zeiten der Signal-Zwischenräume, die aufgetreten sind, solange am ersten Speicherplatz eine von Null verschiedene Summe vorhanden ist
- an einem dritten Speicherplatz laufend die Dauer der seit der Beendigung des letzten Signals verflossenen Zeit, solange am ersten Speicherplatz eine von Null verschiedene Summe vorhanden ist
- an einem vierten Speicherplatz die Zahl der Vorderflanken von Signalen, die auftreten, solange am zweiten Speicherplatz eine von Null verschiedene Summe vorhanden ist,

gespeichert wird. Weitere, jedem Umsetzer zugeordnete Speicherplätze werden später beschrieben. Im Computer 18 sind ausserdem sieben für alle Umsetzer gültige feste Werte gespeichert,

- 6 -

die entsprechend dem Programm und gemäss späteren Beschreibungen mit den in den Speichern befindlichen Werten verglichen werden, wodurch entsprechend dem Ergebnis weitere Vorgänge ausgelöst werden.

Mit Hilfe des Computers 18 werden aufgrund der über die Verbindungen 6 von den verschiedenen Umsetzern abgegebenen Gleichspannungssignale sowohl die Gültigkeit der empfangenen Tonfrequenzkombinationen geprüft als auch die Ausgänge 8 der Tonauswerte-Stromkreise 3 gesteuert.

Die zuletzt genannte Steuerung stützt sich auf die am ersten Speicherplatz gespeicherte Summe. Sofern am Ausgang 6 eines bestimmten Umsetzers die Summe von Signalen und Zwischenräumen länger als ein bestimmter fester Wert, z.B. 32 ms dauert, gibt der Computer 18 über die Verbindung 12 die Adresse des betreffenden Umsetzers und über die Verbindung 14 einen Impuls ab, worauf die Verbindung 7 des betreffenden Umsetzers in den aktiven Zustand versetzt wird und vorderhand in diesem Zustand verbleibt. Dies bewirkt, dass an den Ausgängen 8 des betreffenden Umsetzers die momentan ausgewertete Tonsignal-Kombination markiert wird, wobei diese Markierung vorderhand aufrechterhalten bleibt.

Wird dagegen anhand der am dritten Speicherplatz gespeicherten Zeit festgestellt, dass das Signal am Ausgang 6 eines Umsetzers während einer einen bestimmten Minimalwert von beispielsweise 16 ms übersteigenden Dauer unterbrochen ist, gibt der Computer 18 über die Verbindung 12 die Adresse des betreffenden Umsetzers ab, belässt jedoch die Verbindung 14 im Ruhezustand, worauf der Speicher 10 am betreffenden Speicherplatz in den Ruhezustand übergeht. Dies bewirkt auch den Ruhezustand auf der betreffenden Verbindung 7 nach dem betreffenden Umsetzer, wobei jedoch die Markierung der Ausgänge 8 vorderhand aufrecht erhalten bleibt.

Empfängt nun der betreffende Umsetzer erneut eine gegebenenfalls von kurzen Zwischenräumen unterbrochene Tonfrequenzkombination von mindestens 32 ms Dauer, bewirkt dies, dass, wie früher beschrieben, auf der betreffenden Verbindung 7 wiederum Arbeitspotential angelegt wird. Sofern die empfangene Tonsignalkombination die gleiche ist wie vorher, ändert sich an den Ausgängen 8 des betreffenden Umsetzers nichts. Weicht die momentan empfangene Kombination dagegen von der vorher empfangenen ab, nehmen anlässlich des Auftretens des Arbeitspotentials auf der betreffenden Verbindung 7 die über die Verbindungen 8 abgegebenen Signale die neuen Werte an und verbleiben vorderhand auf den betreffenden Potentialen.

Auf die zuletzt beschriebene Weise wird sichergestellt, dass eine Tonfrequenzkombination nur dann als erkannt gilt, wenn sie während einer bestimmten Mindestdauer aufgetreten ist.

Im Ruhezustand eines Umsetzers, d.h. solange er keine Tonfrequenzkombination empfängt, sind im Computer 18 alle diesem Umsetzer zugeordneten Speicherplätze leer. Wird nun jedoch an einem bestimmten Umsetzer eine Tonfrequenzkombination empfangen und gibt er demzufolge an seinem Ausgang 6 ein Signal ab, beginnt sich der dem betreffenden Umsetzer zugeordnete erste Speicherplatz zu füllen.

Nach Beendigung des Signals bleibt der Wert am ersten Speicherplatz vorderhand erhalten und der zweite und der dritte Speicherplatz beginnen sich zu füllen. Ein dritter fester Wert von beispielsweise 20 ms und ein vierter fester Wert von beispielsweise 40 ms werden dauernd mit dem Wert im dritten

0184984

- 8 -

Speicherplatz verglichen. Der Zwischenraum bis zum erneuten Erscheinen eines Signals ist nun entweder unter dem dritten festen Wert, zwischen den beiden festen Werten oder länger als der vierte feste Wert.

Vorderhand wird ein Wert unterhalb des dritten festen Wertes, d.h. unterhalb von 20 ms angenommen. Beim erneuten Erscheinen des Signals wird der dritte Speicherplatz geleert, die dort gespeicherte Zwischenraum-Zeit an den ersten Speicherplatz überführt und dort zu der vorhandenen Summe hinzugezählt, während am vierten Speicherplatz eine Einheit eingespeichert wird. Bei einem Signal, das mehrmals von unterhalb des dritten festen Wertes liegenden Zwischenräumen unterbrochen ist, werden somit abwechslungsweise der erste und der zweite, ferner der vierte Speicherplatz gefüllt, während der dritte Speicherplatz nach jedem erneuten Auftreten eines Signals geleert wird.

Ist dagegen der Zwischenraum bis zum erneuten Erscheinen eines Signals länger als 20, jedoch kürzer als 40 ms, wird der Speicherinhalt am ersten, zweiten, dritten und, sofern ein Inhalt vorhanden war, auch am vierten Speicherplatz gelöscht, so dass in bezug auf die Speicher wiederum gleiche Verhältnisse erreicht werden wie in der Ausgangslage.

Sofern der Zwischenraum bis zum Erscheinen eines Signals länger als 40 ms · ist und daher der Inhalt des dritten Speicherplatzes den vierten festen Wert überschreitet, treten, entsprechend der Programmierung des Mikrocomputers, die folgenden Wirkungen ein:

- Der dritte Speicherplatz wird geleert, die dort gespeicherte Zwischenraum-Zeit wird von der am zweiten Speicherplatz gespeicherten Zwischenraum-Summe abgezogen und die Differenz am zweiten Speicherplatz wiederum eingespeichert

- 9 -

- der Inhalt des ersten Speicherplatzes wird mit einem ersten festen Wert, beispielsweise 32 ms verglichen

- aus der Summe der am ersten und der Summe der am zweiten Speicherplatz gespeicherten Zeit wird ein erster Quotient gebildet, und dieser Quotient wird an einem fünften Speicherplatz eingespeichert

- aus der Summe der am ersten Speicherplatz gespeicherten Zeit einerseits und dem am vierten Speicherplatz gespeicherten Wert anderseits wird ein zweiter Quotient gebildet, und dieser zweite Quotient wird an einem sechsten Speicherplatz eingespeichert

- der am fünften Speicherplatz gespeicherte erste Quotient wird mit einem zweiten festen Wert, beispielsweise 4, verglichen

- der am sechsten Speicherplatz gespeicherte zweite Quotient wird mit einem fünften festen Wert, beispielsweise 30 ms, verglichen.

Nur sofern bei den erwähnten Vergleichen mit dem ersten, zweiten und fünften festen Wert in allen drei Fällen der verglichene Wert den festen Wert mindestens erreicht, erzeugt der Computer an seinem Ausgang 24 ein Signal, das den Empfang eines gültigen Zeichens bedeutet, und auf den Leitungen 23 liefert er die Adresse des betreffenden Umsetzers.

Unabhängig davon, ob dieses Empfangssignal abgegeben wurde oder nicht, wird der Speicherinhalt an allen Speicherplätzen gelöscht, worauf der beschriebene Ausgangszustand in bezug auf den betreffenden Umsetzer wiederum hergestellt ist.

Das erwähnte über die Verbindung 24 abgegebene Empfangssignal wird nun im Speicher 15 an dem dem betreffenden Umsetzer entsprechenden Platz gespeichert.

Die Steuereinrichtung 19 tastet nun, grundsätzlich unabhängig von der Funktion des Computers 18, alle Auswerter nach einem gültigen Empfangskriterium ab. Ueber die Leitungen 17 fragt sie nacheinander die Speicherplätze im Speicher 15 ab und synchron dazu legt sie über die verschiedenen Schalter 4 jeweils die Leitungen 8 des betreffenden Umsetzers an die Sammelleitungen 22, auf denen somit nacheinander gültige und ungültige Signale erscheinen. Ueber die Leitungen 20 gibt sie die Adresse der jeweils abgetasteten Auswerteinrichtung zwecks Weiterverarbeitung weiter.

Eine nicht dargestellte, über die Verbindungen 21 erreichte Speicher- und Verarbeitungseinrichtung erhält nun nacheinander kodierte Empfangsmeldungen über die Verbindungen 22, zugehörige Adressen über die Leitungen 20 und dazu, sofern an der betreffenden Adresse im Speicher 15 eine Empfangsmeldung vorliegt, über die Verbindung 16 eine Bestätigung für den richtigen Empfang. Diese bei 21 angeschlossene Einrichtung verarbeitet nun nur solche auf den Verbindungen 22 eintreffende Signale, die von einem Signal auf der Verbindung 16 begleitet sind.

Die früher beschriebene Leerung von Speicherplätzen, wenn ein Zwischenraum den dritten festen Wert überschreitet und die zuletzt beschriebenen Ueberprüfungen der empfangenen Signale bewirken nun, dass ein Signal nur dann als gültig anerkannt wird, wenn

- es keine Zwischenräume enthält, welche den dritten festen Wert (beispielsweise 20 ms) übersteigen
- die Summe von Signalen und Zwischenräumen mindestens den ersten festen Wert (beispielsweise 32 ms) erreicht, wobei die genannte Summe zwischen einem Anfang, der von der Hinterflanke des letzten Signals um einen mindestens den dritten festen Wert erreichenden Abstand entfernt ist und einem Ende, das um einen mindestens den vierten festen Wert erreichenden Abstand von der Vorderflanke des nächsten Signals entfernt ist, gerechnet ist

- die Summe von Signalen und Zwischenräumen im Verhältnis zu den Zwischenräumen mindestens den zweiten festen Wert (beispielsweise 4) erreicht und

- bei mehr als einmal unterbrochenen Signalen eine von der Zahl der Unterbrüche abhängige Mindest-Gesamtlänge, d.h. ein der Zahl der Unterbrüche entsprechendes Mehrfaches des fünften Festwertes (beispielsweise 30 ms) vorhanden ist,

wobei die entsprechenden Messungen jeweils dann vorgenommen werden, wenn die Abwesenheit eines Signals den vierten festen Wert (beispielsweise 40 ms) erreicht.

Das abgegebene, den richtigen Empfang anzeigende Signal ist, unabhängig von der Dauer des Tonsignals, in allen Fällen ein kurzer Impuls.

Nach dem Stande der Technik ist demgegenüber für eine Gültigerkennung lediglich ein einmaliges Ueberschreiten eines ersten festen Wertes (beispielsweise 28 ms) durch das Signal oder einen Teil desselben notwendig, wobei das abgegebene, den richtigen Empfang anzeigende Ausgangssignal in der Dauer ungefähr dem empfangenen Tonsignal entspricht. Zwischenräume in einem als gültig anerkannten Signal, welche einen zweiten festen Wert (beispielsweise 28 ms) nicht überschreiten, bewirken keinen Unterbruch des Ausgangssignals, so dass eine Vortäuschung des Empfangs mehrerer Signale verhindert ist.

Die Vorteile der Erfindung können am besten anhand der Figuren 2...6 ersehen werden, wo verschiedene verstümmelte Signale dargestellt sind, welche entweder offensichtlich ungültig sind, nach dem Stande der Technik jedoch als gültig angenommen werden, oder welche offensichtlich gültig sind, nach dem Stande der Technik jedoch nicht als gültig erkannt werden.

Anhand der Figuren 2 bis 5 werden Beispiele empfangener Signale gezeigt, bei denen nach dem Stand der Technik ein Ausgangssignal gebildet worden wäre, wogegen bei Anwendung der Erfindung keine Anerkennung eines Signals erfolgt. Es sind in jeder Figur zwei Zeilen angegeben, wovon die erste (a) ein verstümmeltes Signal zeigt, wie es am Ausgang 6 eines Umsetzers erscheint und die zweite Zeile (b) ein Ausgangssignal zeigt, wie es bei einer Einrichtung nach dem Stande der Technik aufträte. Die Zeiten der Signale und der Zwischenräume sind dabei in ms angegeben.

Die Figur 2 zeigt ein Signal von 30 ms Dauer, welches eine herkömmliche Einrichtung nach 28 ms zum Ansprechen bringt. In einer Einrichtung nach der Erfindung dagegen wird die Gültigkeit des Signals erst nach Aufhören des Signals und dem Ablauf einer dem vierten festen Wert (40 ms) entsprechenden Zeitspanne im Zeitpunkt c festgestellt. Die Gültigkeit wird dabei negativ beurteilt, weil die Summe der Zeiten der Signale und Zwischenräume (im vorliegenden Falle nur eine einzige Zeit, 30 ms) den ersten festen Wert (32 ms) nicht erreicht. Die beiden zur Beurteilung dienenden Quotienten können hier nicht gebildet werden, da keine Unterbrüche vorhanden sind. Die Nichtanerkennung des Signals ist somit allein auf die Nichterfüllung der Bedingung im Zusammenhang mit dem ersten festen Wert zurückzuführen.

Die Figur 3 zeigt ein Signal, bei welchem die Summe der Signale und Zwischenräume 50 ms und die Dauer des einzigen Zwischenraums 15 ms beträgt. Mit einer Auswerteeinrichtung nach dem Stande der Technik würde ein Ausgangssignal gebildet, welches 28 ms nach dem Anfang des Signals beginnt und 52 ms dauert. Mit einer Auswerteeinrichtung gemäss der Erfindung wird jedoch das Signal nicht als gültig anerkannt, da der erste Quotient mit 50/15 = 3,33 den zweiten festen Wert nicht erreicht. Die Summe der Signale und Zwischenräume übersteigt den ersten festen Wert und der Unterbruch von 15 ms unterschreitet den dritten festen Wert. Da nur ein einziger Unterbruch vorhanden ist, kann der zweite Quotient nicht gebildet werden. Die Nichtanerkennung der Signale ist somit allein auf die Nichterfüllung der Bedingung im Zusammenhang mit dem zweiten festen Wert zurückzuführen.

Die Figur 4 zeigt ein Signal, das aus einem 40 ms und einem 30 ms langen Stück, unterbrochen durch einen Zwischenraum von 22 ms, besteht. Mit einer Auswerteeinrichtung nach dem Stande der Technik würde 28 ms nach Beginn des Signals ein 94 ms langes Ausgangssignal gebildet. In einer Einrichtung nach der Erfindung wird dagegen erst nach dem Ablauf des vierten festen Wertes nach Beendigung des Signals von 30 ms (der betreffende Zeitpunkt c findet auf der Figur keinen Platz mehr) die Gültigkeit des Signals beurteilt. Die Summenbildung am ersten Speicherplatz, welche beim Auftreten des Unterbruchs auf dem Wert 40 steht, wird wiederum gelöscht, nachdem der Zwischenraum den dritten festen Wert (20 ms) überschritten hat. Bei der Auswertung werden somit lediglich 30 ms als Summe von Signalen und Zwischenräumen angerechnet, so dass der erste feste Wert nicht erreicht wird. Die Signale werden somit nicht als gültig anerkannt, obwohl die wirkliche Summe der Signale und Zwischenräume mit 92 ms weit über dem ersten festen Wert liegt und der erste Quotient mit 92/22 = 4,2 oberhalb des zweiten festen Wertes (4) liegt. Da nur ein einziger Unterbruch vorliegt, kommt die Bildung des zweiten Quotienten nicht in Frage. Die Nichtanerkennung der Signale ist somit allein auf die Nichterfüllung der Bedingung im Zusammenhang mit dem

0184984

- 14 -

dritten festen Wert zurückzuführen.

Die Figur 5 zeigt ein Signal, welches aus drei Teilen besteht, wobei die Summe der Signale und Zwischenräume 45 ms beträgt. Es sind zwei Zwischenräume (welche zwei Vorderflanken während des Zählvorgangs entsprechen) vorhanden, deren Summe 10 ms beträgt. Mit einer Auswerteeinrichtung nach dem Stande der Technik würde ein Ausgangssignal gebildet, welches 28 ms nach dem Anfang des Signals beginnt und 47 ms dauert. Mit einer Auswerteeinrichtung gemäss der Erfindung wird jedoch das Signal nicht als gültig anerkannt, da der zweite Quotient 45/2 = 22,5 ms beträgt, was unterhalb des fünften festen Wertes (30 ms) liegt. Die Summe der Signale und Zwischenräume übersteigt den ersten festen Wert, beide Unterbrüche unterschreiten den dritten festen Wert und der erste Quotient errechnet sich zu 50/10 = 5, was über dem zweiten festen Wert liegt. Die Nichtanerkennung der Signale ist somit allein auf die Nichterfüllung der mit dem fünften festen Wert im Zusammenhang stehenden Bedingung zurückzuführen.

In jeder der Figuren 2 bis 5 ist somit ein Signalbild dargestellt, welches eine bestimmte Bedingung nicht erfüllt, während die drei anderen Bedingungen erfüllt werden.

Die Figur 6 zeigt ein Beispiel eines empfangenen Signals, das mit einer Auswerteeinrichtung nach dem Stand der Technik nicht zu einem Ausgangssignal führen würde, während mit einer Einrichtung gemäss der Erfindung ein Ausgangssignal abgegeben wird. Die Anordnungen und Bezeichnungen entsprechen denjenigen der Figuren 2 bis 5. Da der längste Teil des Signals unterhalb des Wertes von 28 ms liegt, könnte eine Einrichtung nach dem Stande der Technik nicht ansprechen. Die Bedingungen für die Abgabe eines Ausgangssignals bei einer Einrichtung gemäss der Erfindung sind jedoch alle erfüllt. Die Summe der Signalzeiten und Zwischenräume beträgt 74 ms und diejenige der Zwischenräume 7 ms. Die Zahl der Unterbrüche beläuft sich auf 2. Es sind keine Unterbrüche vorhanden, die den dritten festen Wert übersteigen, und die Summe der Signale und Zwischenräume übersteigt den ersten festen Wert. Der erste Quotient beläuft sich auf 74/7 = 10,5 und liegt damit oberhalb des zweiten festen Wertes, während der zweite Quotient 67/2 = 33,5 ergibt, was oberhalb des fünften festen Wertes liegt. Für eine Anerkennung des Signals sind damit alle Bedingungen erfüllt, so dass nach Ablauf des vierten festen Wertes nach Beendigung des letzten Signalteils (in der Figur nicht mehr sichtbar) ein Ausgangsimpuls erzeugt wird, während - wie schon früher erwähnt - in einer Auswerteeinrichtung nach dem Stand der Technik kein Ausgangssignal erzeugt worden wäre.

Die Erfindung ist natürlich nicht an das Auführungsbeispiel gebunden. Insbesondere sind die angegebenen Festwerte nur als Beispiele zu betrachten und können ohne Schwierigkeiten durch Programmänderungen am Computer für alle davon abhängigen Auswerteeinrichtungen gleichzeitig geändert werden, während nach dem Stande der Technik bei jeder Auswerteeinrichtung Bestandteile ausgewechselt werden müssten.

Die Erfindung ist auch nicht an die gleichzeitige Anwendung aller beschriebenen Prüfungen gebunden. Sie bietet auch dann Vorteile gegenüber dem Stand der Technik, wenn die Prüfung der mittleren Länge bei unterbrochenen Signalen weggelassen wird.

Die Erfindung ist auch nicht an die Erzeugung des Ausgangssignals nach Beendigung des Tonsignals gebunden. Die Quotienten könnten auch laufend gebildet und ein Ausgangssignal erzeugt werden, solange die Bedingungen erfüllt sind.

- 16 -

Die Erfindung ist auch nicht an die Anwendung eines Computers und an die im Beispiel gezeigte Weiterverarbeitung der gewonnenen Signale gebunden. Die Quotienten und Zeitmessungen könnten auch in analoger Technik und für jede Auswerteeinrichtung getrennt ausgeführt werden, und das Ergebnis der Auswertung könnte von jeder Auswerteeinrichtung direkt an eine empfangende Stelle übermittelt werden.

Die Erfindung ist auch nicht an die beschriebene Quotientenbildung gebunden. Anstelle jeweils der Summe von Signal- und Zwischenraumzeit könnte auch die Signalzeit allein der Zwischenraumzeit gegenübergestellt werden, oder es könnte von Anfang an die Summe der Signal- und Zwischenraumzeiten am gleichen Speicherplatz und an einem andern ausschliesslich die Summe der Zwischenraumzeiten gespeichert werden. Als Quotient könnte auch der inverse Wert zu dem im Beispiel aufgeführten verwendet werden.

Beim Auftreten eines Zwischenraums, der den dritten festen Wert überschreitet, könnte die Erzeugung eines Ausgangssignals auch dadurch verhindert werden, indem bei der Feststellung des genannten Ueberschreitens anstelle des beschriebenen Befehls zur Löschung der vorher gespeicherten Werte ein besonderes Sperrkriterium erzeugt und gespeichert würde, welches erst nach Beendigung des zuletzt eingetroffenen Signalteils wirksam würde. Mit diesem letztgenannten Kriterium könnte dann, auch wenn alle übrigen Bedingungen erfüllt wären, die Abgabe eines Ausgangssignals verhindert werden.

Patentansprüche

1. Auswerteeinrichtung für ein impulsweise auftretendes Tonsignal (2), mit Mitteln zur Bildung eines den Empfang eines gültigen Signals anzeigenden Ausgangssignals (24, 16), welches Tonsignal einerseits durch Unterbrüche und anderseits durch in dessen Pausen auftretende Sprachsignale gestört sein kann, wobei die Auswerteeinrichtung einen frequenzselektiven Umsetzer (3) enthält, welcher aufgrund ihm zugeführter Tonsignale (2) Gleichspannungssignale (6,13) mit einer der Dauer der Tonsignale entsprechenden Dauer und mit von der Amplitude der Tonsignale unabhängiger Amplitude erzeugt, gekennzeichnet durch eine die Gleichspannungssignale (13) verarbeitende Anordnung (18) mit Schaltungsmitteln, welche je die Dauer der Signale und die Dauer der Zwischenräume zwischen den Signalen summieren, zwischen den beiden Summen eine Quotienten-Beziehung herstellen und die Abgabe des Ausgangssignals (24,16) unter anderem vom Wert dieses Quotienten abhängig machen.

2. Auswerteeinrichtung nach Patentanspruch 1, gekennzeichnet durch in der genannten Anordnung vorhandene

- erste Schaltungsmittel, welche einen ersten Summenwert aus den Zeiten aufeinanderfolgender Gleichspannungssignale und Zwischenräume bilden und speichern

- zweite, von den ersten Schaltungsmitteln abhängige Schaltungsmittel, welche während der Zeit, da ein von Null abweichender erster Summenwert gespeichert ist, einen zweiten Summenwert aus den Zeiten aufeinanderfolgender Zwischenräume bilden

- dritte Schaltungsmittel, welche den ersten Summenwert mit einem ersten festen Wert vergleichen

- vierte Schaltungsmittel, welche zwischen den beiden Summen eine erste Quotienten-Beziehung herstellen

- fünfte, von den vierten Schaltungsmitteln abhängige Schaltungsmittel, welche den ersten Quotienten mit einem zweiten festen Wert vergleichen und

- sechste, von den dritten und den fünften Schaltungsmitteln abhängige Schaltungsmittel, welche das Ausgangssignal (24) erzeugen und die gespeicherten Summenwerte löschen, sofern erstens der erste Summenwert den ersten festen Wert mindestens erreicht und zweitens der Wert des ersten Quotienten in einer bestimmten Beziehung zum zweiten festen Wert steht.

3. Auswerteeinrichtung nach Patentanspruch 2, gekennzeichnet durch in der genannten Anordnung (18) vorhandene siebente Schaltungsmittel, welche die Länge der einzelnen Zwischenräume mit einem dritten festen Wert vergleichen.

4. Auswerteeinrichtung nach Patentanspruch 3, gekennzeichnet durch eine Ausbildung der siebenten Schaltungsmittel, gemäss welcher sie die durch die ersten und die zweiten Schaltungsmittel gespeicherten Summen löschen, sofern sie einen Zwischenraum feststellen, welcher den dritten festen Wert übersteigt.

5. Auswerteeinrichtung nach Patentanspruch 3, gekennzeichnet durch eine Ausbildung der siebenten Schaltungsmittel, gemäss welcher sie, sofern sie einen den dritten festen Wert übersteigenden Zwischenraum feststellen, diesen Umstand speichern und aufgrund dieses gespeicherten Wertes die sechsten Schaltungsmittel an der Erzeugung eines Ausgangssignals hindern.

6. Auswerteeinrichtung nach Patentanspruch 2, gekennzeichnet durch in der genannten Anordnung (18) vorhandene achte Schaltungsmittel, welche die Länge der einzelnen Zwischenräume mit einem mindestens den Wert des dritten festen Wertes aufweisenden vierten festen Wert vergleichen und welche die dritten und fünften und damit auch die sechsten Schaltungsmittel erst dann wirksam werden lassen, nachdem sie einen Zwischenraum festgestellt haben, dessen Dauer den vierten festen Wert erreicht, und dass die vierten Schaltungsmittel vor der Quotientenbildung die durch die zweiten Schaltungsmittel festgestellte Summe um den vierten festen Wert vermindern.

7. Auswerteeinrichtung nach Patentanspruch 6, gekennzeichnet durch zusätzlich in der genannten Anordnung (18) vorhandene

- neunte, von den ersten Schaltungsmitteln abhängige Schaltungsmittel, welche während der Zeit, da ein von Null abweichender erster Summenwert gespeichert ist, die Vorderflanken der Impulse zählen und das Zählergebnis löschen, sofern die sechsten Schaltungsmittel wirksam geworden sind

- zehnte, von den ersten und neunten Schaltungsmitteln abhängige Schaltungsmittel, welche aus dem ersten Summenwert und der Zahl der gezählten Flanken einen zweiten Quotienten bilden

- elfte, von den zehnten Schaltungsmitteln abhängige Schaltungsmittel, welche den zweiten Quotienten mit einem fünften festen Wert vergleichen

- zwölfte, von den achten und den elften Schaltungsmitteln abhängige Schaltungsmittel, welche das von den sechsten Schaltungsmitteln erzeugte Ausgangssignal (24) nur wirksam werden lassen, wenn der zweite Quotient den fünften festen Wert mindestens erreicht.

8. Auswerteeinrichtung nach Patentanspruch 2, dadurch gekennzeichnet, dass die sechsten Schaltungsmittel das Ausgangssignal (24,16) mit einer von der Dauer der Gleichspannungssignale unabhängigen Dauer erzeugen.

9. Auswerteeinrichtung nach Patentanspruch 1, dadurch gekennzeichnet, dass die genannte Anordnung durch einen Mikrocomputer (18) gebildet ist, welcher die zu verarbeitenden Eingangssignale während bestimmten Zeitschlitzen verarbeitet (9) und die sich aus der Verarbeitung ergebenden Ausgangssignale während bestimmten Zeitschlitzen abgibt (15) und damit ermöglicht, während andern Zeitschlitzen Bestandteil von weitern Auswerteeinrichtungen (1, 101...132) zu bilden.

Fig. 1

Fig. 2

Fig. 3

Fig. 4

Fig. 5

Fig. 6

# EUROPÄISCHER RECHERCHENBERICHT

**0184984**
Nummer der Anmeldung

Europäisches Patentamt

EP 85 81 0517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | MITEL TECHNICAL DATA, Application Note MSAN-108, Juni 1983; "Applications of the MT8870 integrated DTMF receiver" * Insgesamt. * | 1 | H 04 Q 1/46 |
| A | WO-A-8 101 623 (MOTOROLA)(11.06.81) * Seite 27, Zeile 8 - Seite 33, Zeile 15 * | 1,9 | |
| A | FR-A-2 374 808 (CSELT)(13.07.78) * Seite 10, Zeilen 11-30 * | 1,9 | |
| A | GB-A-2 080 074 (ITALTEL)(27.01.82) * Seite 3, Zeile 23 - Seite 4, Zeile 115 * | 1,9 | RECHERCHIERTE SACHGEBIETE (Int. Cl.4) H 04 Q |

Der vorliegende Recherchenbericht wurde für alle Patentansprüche erstellt.

| Recherchenort DEN HAAG | Abschlußdatum der Recherche 27-02-1986 | Prüfer VERSLYPE J.P. |
|---|---|---|